# EUROPEAN PATENT APPLICATION

(11) **EP 0 897 680 A2**
(43) Date of publication of application: **24.02.1999**
(21) Application number: 98306406.4
(22) Date of filing: 11.08.1998
(51) Int. Cl.: A45D 44/00

(54) **Method for selecting suitable hairstyle and image-map for hairstyle**

(30) Priority: 12.08.1997 JP 230403/97
(71) Applicant: SHISEIDO COMPANY, LTD., Chuo-ku Tokyo (JP)
(72) Inventor: Ueda, Mieko, Shinagawa-ku, Tokyo (JP); Ishibiki, Tumiko, Shinagawa-ku, Tokyo (JP); Fukuzawa, Kyoko, Shinagawa-ku, Tokyo (JP); Matsumoto, Naoko, Shinagawa-ku, Tokyo (JP); Tokunaga, Ikumi, Shinagawa-ku, Tokyo (JP)
(74) Representative: Mosey, Stephen George

(57) **Abstract**

The present invention provides a method for selecting a suitable hairstyle in conformity with individual personalities and face contours, adopting required requests of a selector, and at the same time this invention provides an image map for the hairstyle where various hairstyles are arranged on an axis of co-ordinates according to images.

Two lines, namely an inner line which constitutes a boundary line between a face and a hairline and also an outer line which constitutes an outside of the hairstyle, are developed, and by making the most of these two lines, the selection of the hairstyle can be attained in satisfactory manners.

## Description

### RELATED INVENTION

This application claims the priority of Japanese Patent Application No. 9-230403 (filed on August 12, 1997) which is expressly incorporated herein by reference in its entirety.

### BACKGROUND OF THE INVENTION

In the past, women's selections of their hairstyles have been decided by their individual preferences, images of their faces, fashions, and professional advice issued by a beautician based on her experiences, knowledge and senses. However, the selected hairstyle is not always suitable for the woman. When a woman changes her hairstyle, she may look as if she were a stranger. Thus, the hairstyle greatly offers an image change. In women's journals or magazines, articles which express and explain the suitable hairstyle are often published, upon which some great concern is paid among ladies. These kinds of the published articles, however, mainly offer general information concerning the face model and hair quality, and they do not offer individual or personal information for any particular woman, such as features of her own face including her eyes, nose, and mouth. All of these data are of importance in the choice of the hairstyle. Accordingly, it is very difficult for each person to decide in theory whether the selected hairstyle is really suitable or not.

### SUMMARY OF THE INVENTION

This invention has an object to provide a method for selecting a suitable hairstyle after checking whether a selected hairstyle is suitable or not and at the same time to provide an image map for a hairstyle where various hairstyles are assorted and arranged on an axis of co-ordinates according to general images.

The present invention has another object to provide a method for selecting a suitable hairstyle wherein the most suitable hairstyle can be decided based on an analysis of personality and facial features of each selector and also adopting her preference and request and at the same time to provide an image map for a hairstyle where it can be easily defined what kind of an image the selected hairstyle has.

In order to fulfil the above objects, the present invention has adopted the following means, wherein a contour of the selector's face and its image are defined for the hairstyle brought by an inner line which constitutes a boundary line between a face and a hairline and an outer line which constitutes an outside of the hairstyle, and wherein it is analysed whether the selected hairstyle is suitable or not with respect to form and balance features and also analysed whether the selected hairstyle is suitable to the image.

Analysis for the form and the balance of the hairstyle is performed based on five elements; 1. Balance between upper and lower parts of the face, 2. Silhouette, 3. Face line, 4. Balancing between head and face, and 5. Total balancing.

Further, analysis for an image of the hairstyle is performed based on two elements; 1. An impression on the hairstyle and 2. An image gap between face features and a hairstyle.

Further, with regard to the analysis for a form of the hairstyle and its balance, the analysis is performed based on a comparison of a standard proportion between the hair and the face.

Further, the standard proportion between the hair and the face is devised as follows:
1. The place of eyes stands in the centre of the whole construction.
2. The proportion ratio between distance from the eyes to a top end of the hairstyle and distance from the eye to a bottom end of the jaw is 1 : 1.
3. The proportion ratio between length of forehead, distance from an end, bottom of the forehead, to a nose tip and distance from the nose tip to the bottom end of the jaw is 1 : 1 : 1.
4. The proportion ratio between the length of the forehead and distance from the top of the forehead at the hairline to the top end of the hairstyle is 1 : 0.5.
5. The proportion ratio between length and breadth of the face including the head and hair is 1.5 : 1.

Further, an image for "light" and "heavy" is prepared on a perpendicular axis up and down, while the image for "curve line" and "straight line" is prepared on a horizontal axis, and thus representative hairstyles in accordance with these expressed images are arranged.

Further, the image for "light" has some features which are youthful, such as fluffy loose hair ends, of bright colour, having hair on the forehead, appearing dry, and the hair length is from short to medium.

On the other hand, the image for "heavy" has some features which possess a calm and adult image such as stable in the hair-ends, of dark colour, not having a hair on the forehead, appearing wet, and the hair length is from medium to long.

The "curve line" has a warm and sweet image, and the hairstyle has some features which are waved and curled, round line, and abundant soft hair at the sides.

The "straight line" has a cool and clean image, and the hairstyle has some features which are straight, angular line, and having a hard and long silhouette.

### BRIEF DESCRIPTION OF THE DRAWINGS

Fig. 1A is a basic shape of a face, and Fig. 1 B is an actual hairstyle, wherein the lower half of the face looks too wide.

Fig. 2A is a basic shape of a face, and Fig. 2B is an actual hairstyle, wherein the face and hairstyle look too long.

Fig. 3A is a basic shape of a face, and Fig. 3B is an actual hairstyle, wherein the total face and hairstyle look too wide.

Fig. 4A is a basic shape of a face, and Fig. 4B is an actual hairstyle, wherein the lines of forehead and jaw look too round.

Fig. 5A is a basic shape of a face, and Fig. 5B is an actual hairstyle, wherein the corners of forehead and jaw look too angular, so that an image is too strong and unfeminine.

Fig. 6A is a basic shape of a face with a volumeless hair, and Fig. 6B is an actual hairstyle, wherein these two examples show their head portion to be too flat.

Fig. 7A is a basic shape of a face with a bulky hair, and Fig. 7B is an actual hairstyle, wherein these two examples show some badly balanced hairstyles.

Fig. 8A is an actual hairstyle, wherein a narrow forehead and a high arrangement of eyes are expressed as an example of undesirable situation.

Fig. 9 is an actual hairstyle, wherein a wide forehead and a low arrangement of eyes are shown in contrast with the above Fig. 8.

Fig. 10 is an actual hairstyle, wherein an image of the hairstyle looks unclean.

Fig. 11 is an actual hairstyle, wherein an image of the hairstyle looks too dark.

Fig. 12 is an actual hairstyle, wherein an image of the hairstyle is too old fashioned.

Fig. 13 is an actual hairstyle, wherein an image of the hairstyle is unnatural.

Fig. 14 is a guide chart map to show the formation of a face construction.

Fig. 15 is an actual hairstyle which gives a cool and fresh impression.

Fig. 16 is an actual hairstyle which gives a lovely impression.

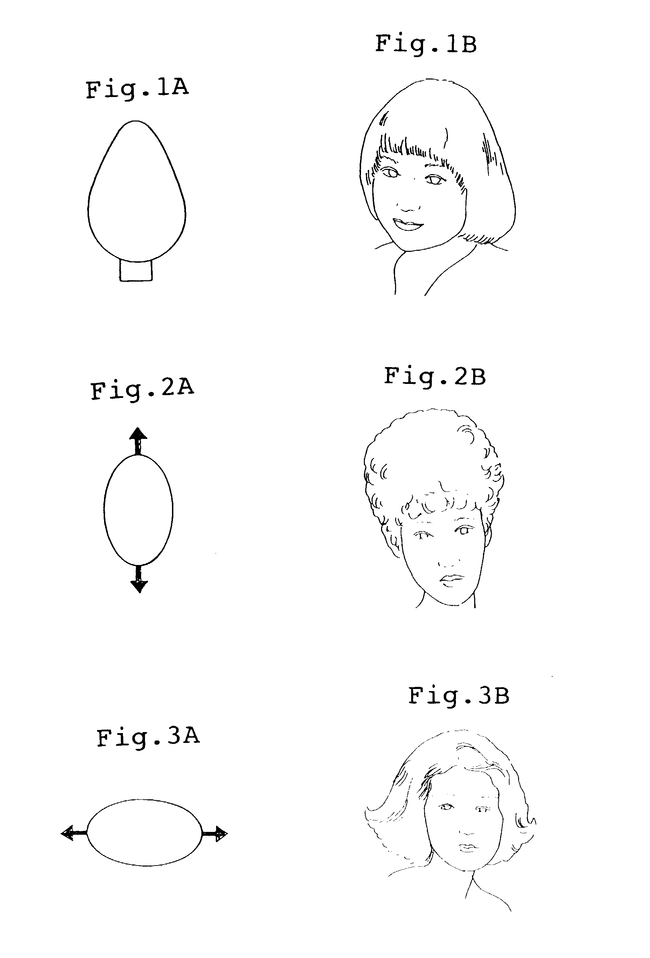

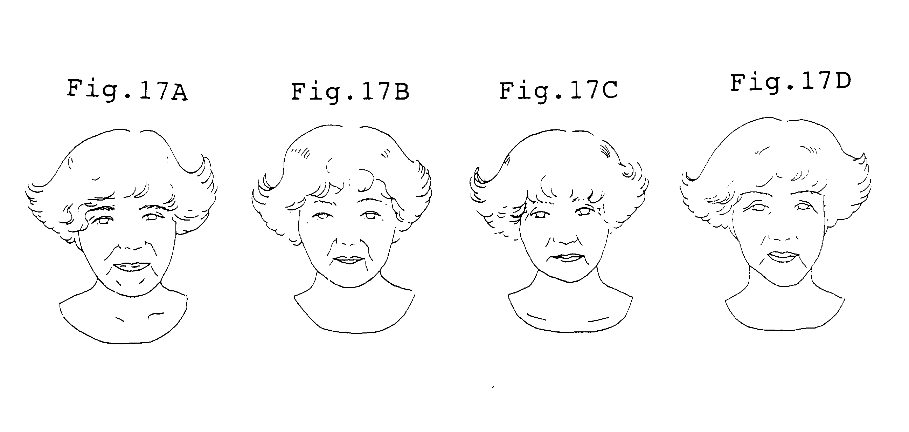

All figures of Fig. 1 7A, Fig. 17B, Fig. 1 7C and Fig. 1 7D show a cute and infantile image adorned by curled or rolling hair.

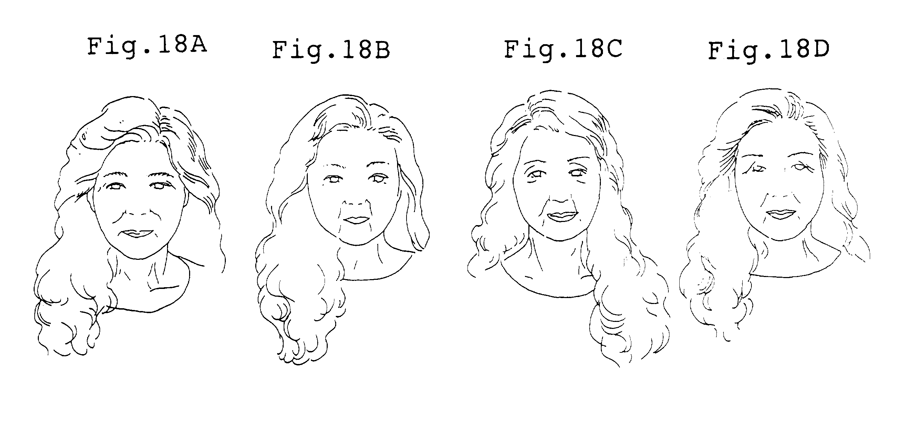

All figures of Fig. 18A, Fig. 18B, Fig. 18C and Fig. 18D show a sexy image adorned by waved long hair.

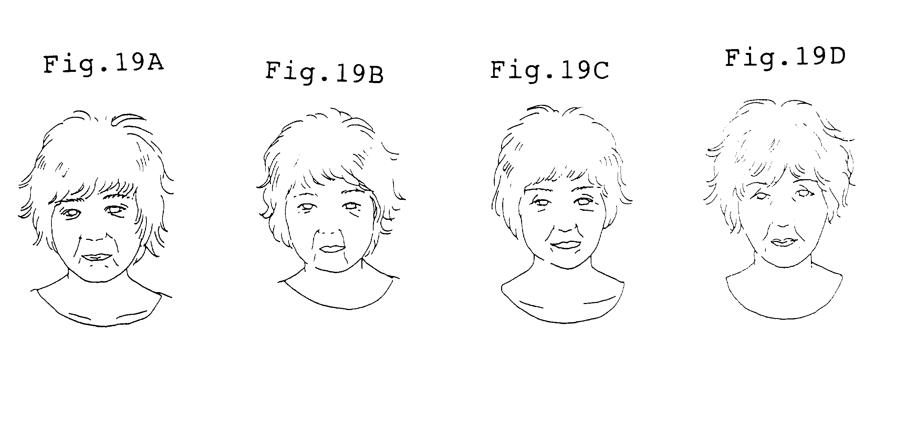

All figures of Fig. 19A, Fig. 19B, Fig. 19C and Fig. 19D show a wild image adorned by short straight hair.

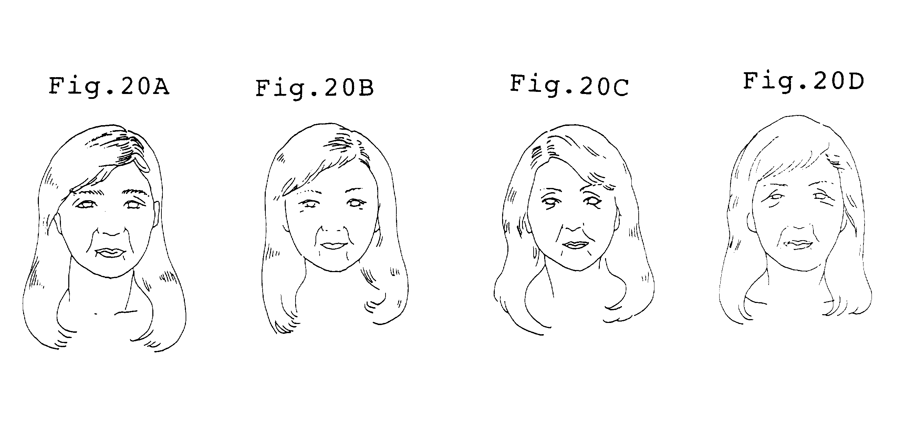

All figures of Fig. 20A, Fig. 20B, Fig. 20C and Fig. 20D show a fresh and clean image adorned by long, straight hair.

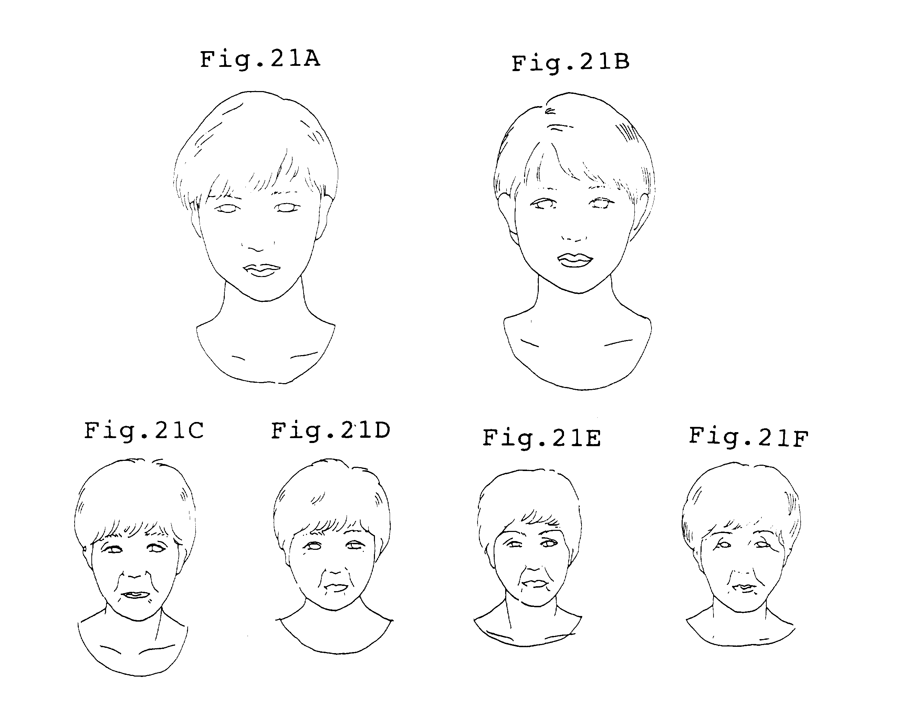

All figures of Fig. 21A, Fig. 21B, Fig. 21C, Fig. 21D, Fig. 21E and Fig. 21F show a natural forehair adorned by short hair with egg-shape silhouettes.

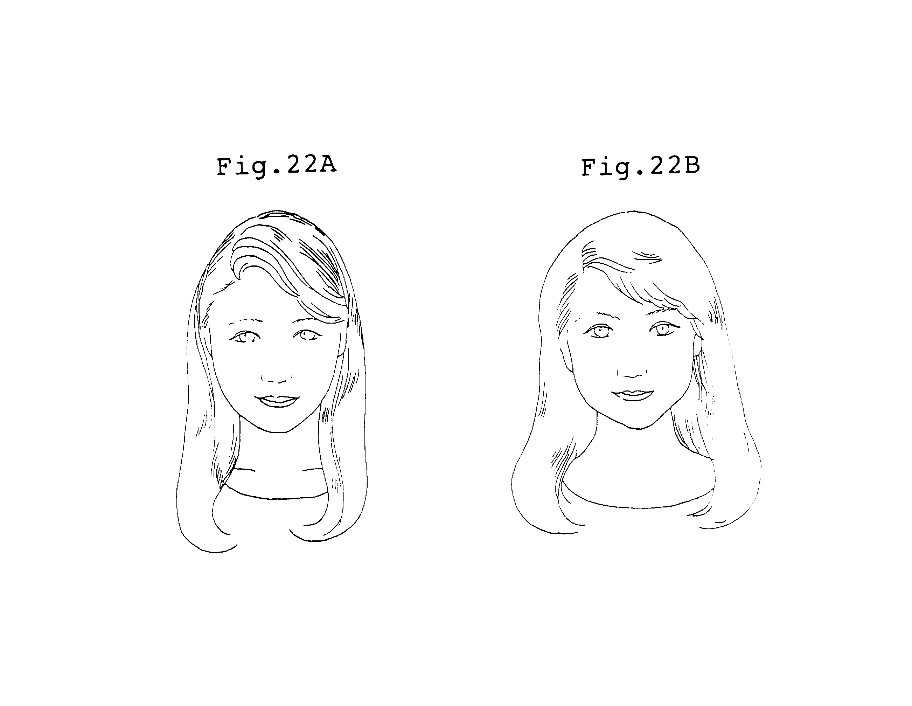

Two figures of Fig. 22A and Fig. 22B show a natural forehair adorned by long hair.

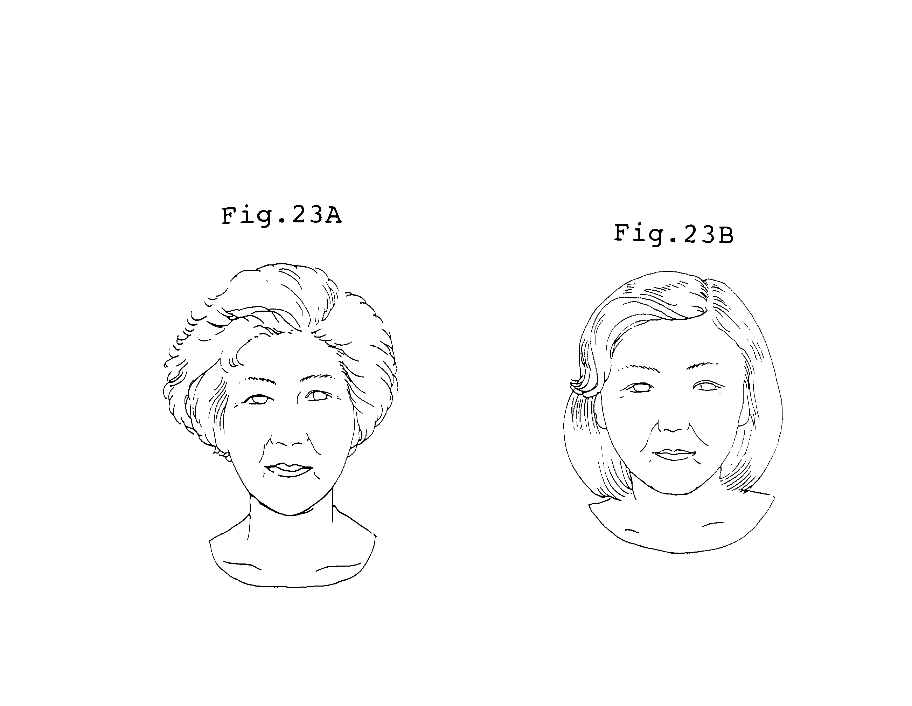

Two figures of Fig. 23A and Fig. 23B show a gentle wave hair in the forehair with short to medium hair.

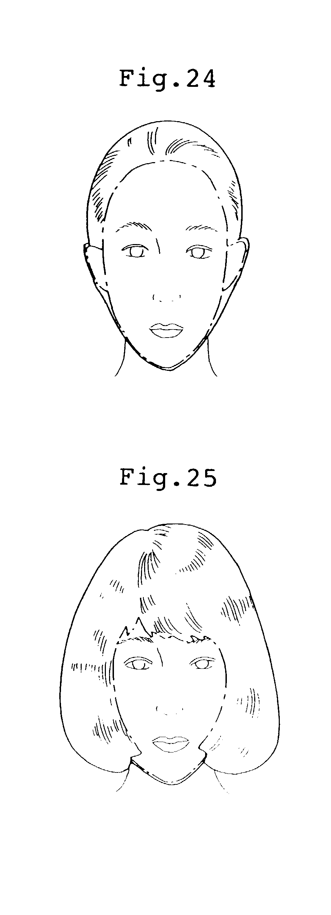

Fig. 24 shows an inner line depicted along a boundary between a face and a hairline.

Fig. 25 shows a condition which conceals a forehead with forehairs.

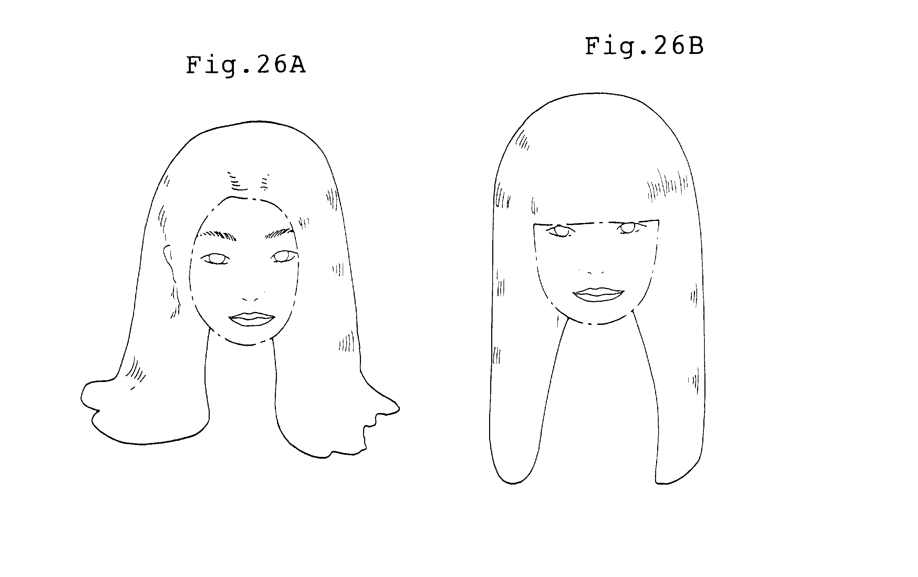

Two figures of Fig. 26A and Fig. 26B compare an inner line with an outer line which is depicted along an out side of the hairstyle.

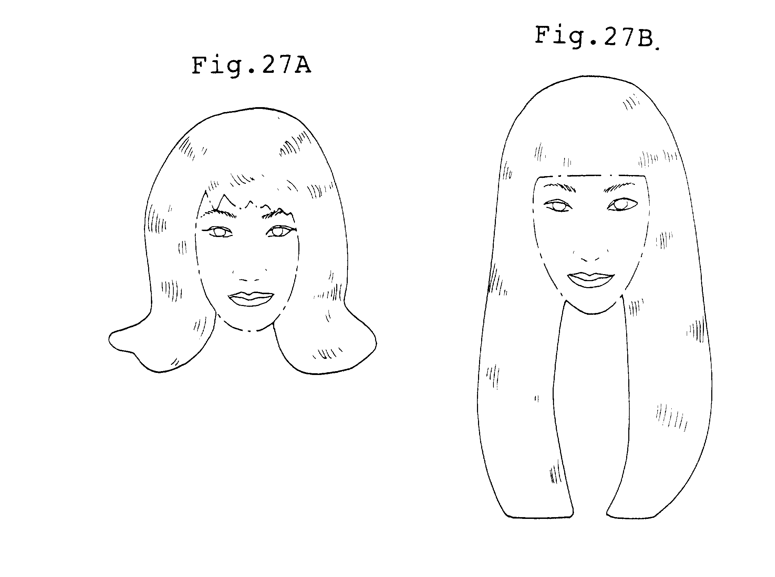

Two figures of Fig. 27A and Fig. 27B show to emphasise long faces.

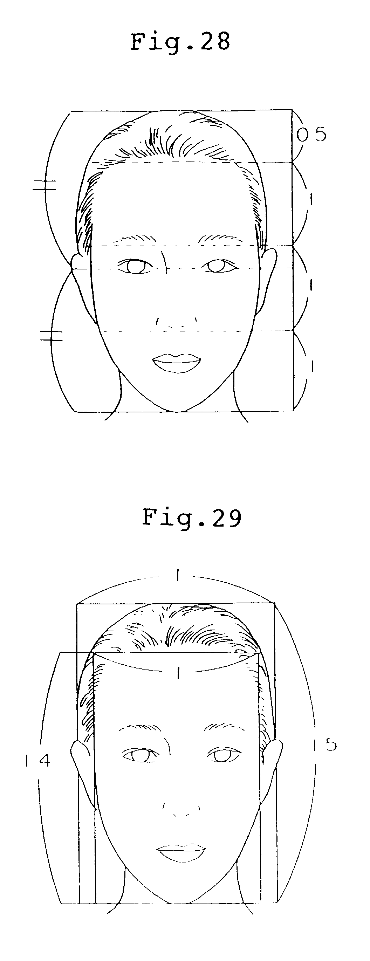

Fig. 28 is an explanatory illustration for a standard proportion.

Fig. 29 is also an explanatory illustration for a standard proportion.

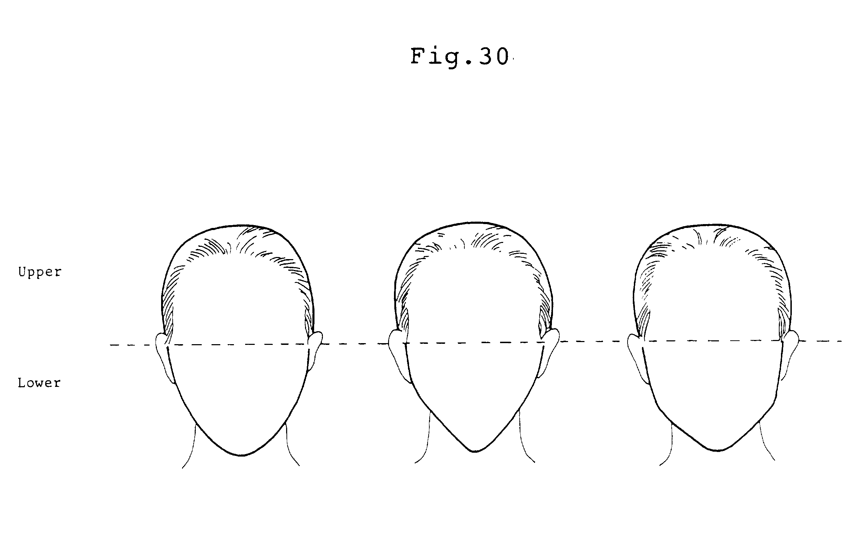

Fig. 30 is an explanatory illustration for an egg shape proportion.

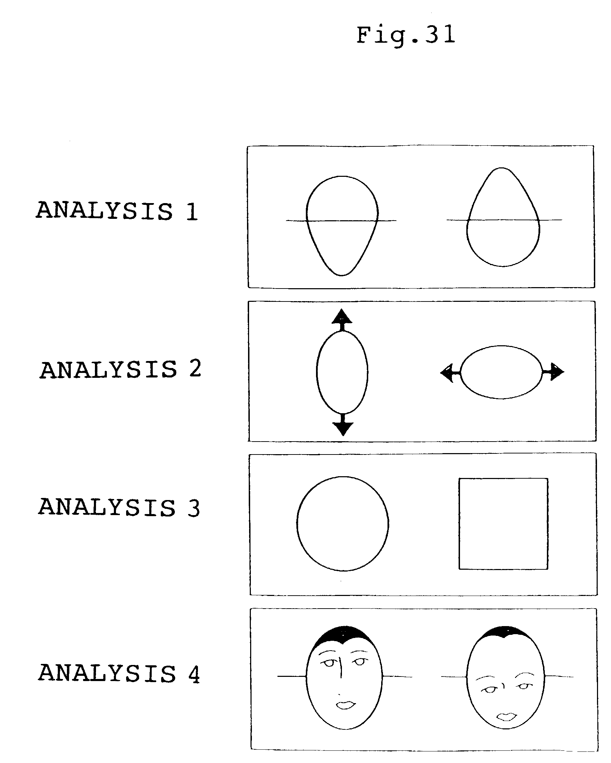

Fig. 31 shows four illustrations for analysing a procedure for the shape and balance.

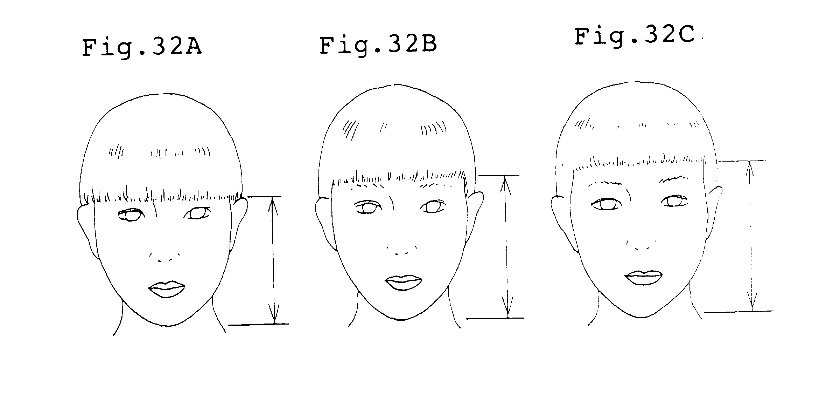

Three figures of Fig. 32A, 32B and Fig. 32C show a first principle of effects brought by hairstyle arrangement.

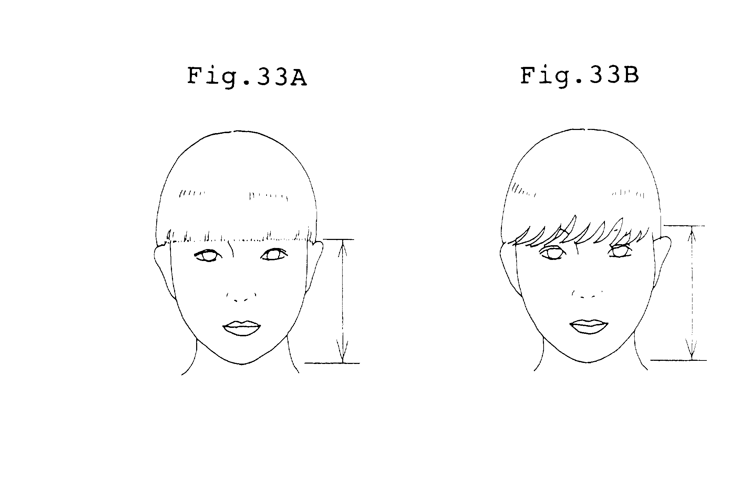

Two figures of Fig. 33A and Fig. 33B show a second principle of effects.

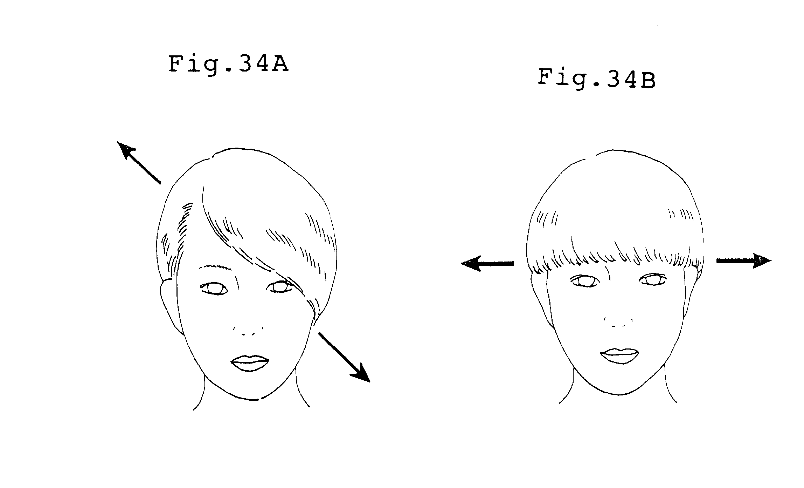

Two figures of Fig. 34A and Fig. 34B show a third principle of effects.

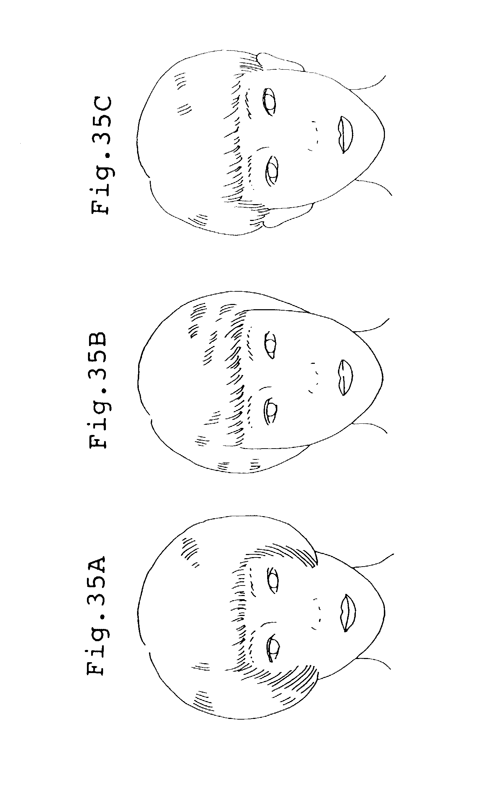

Three figures of Fig. 35A, 35B and Fig. 35C show a fourth principle of effects.

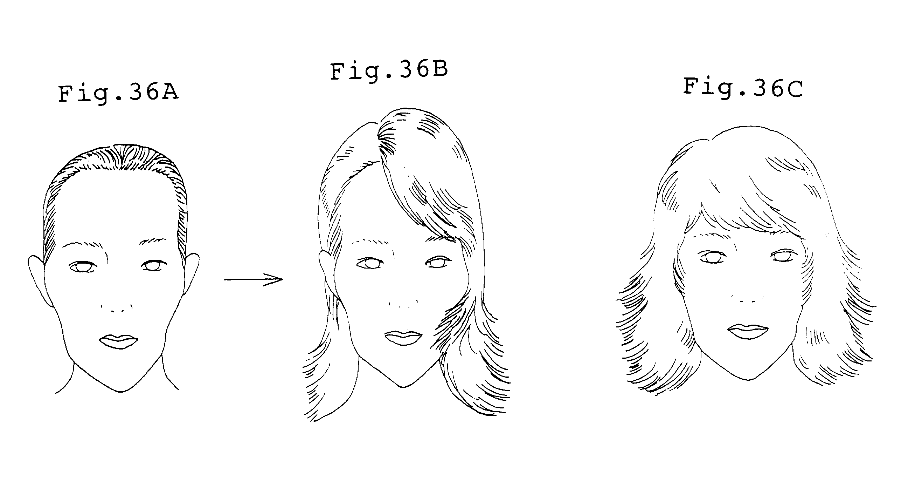

Three figures of Fig. 36A, 36B and Fig. 36C show a procedure to create a good image for a long and angular face by hairstyle arrangement.

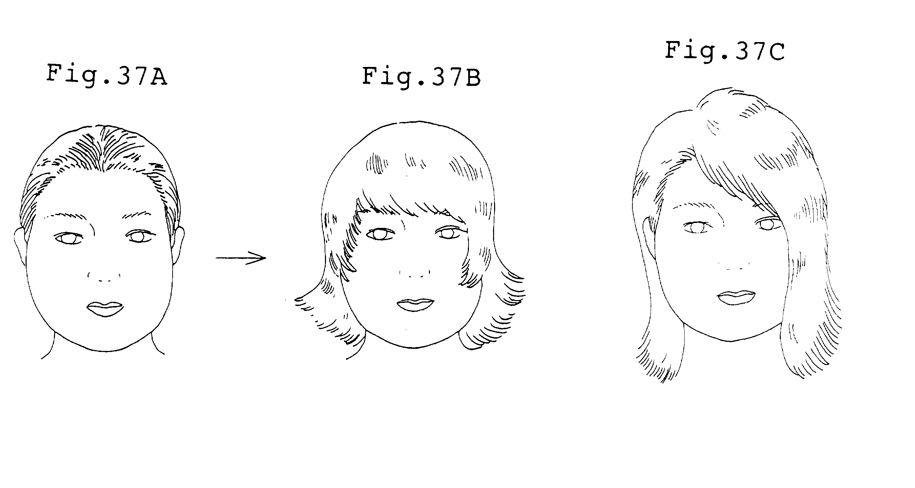

Three figures of Fig. 37A, 37B and Fig. 37C show a procedure to create a good image for a round face by hairstyle arrangement.

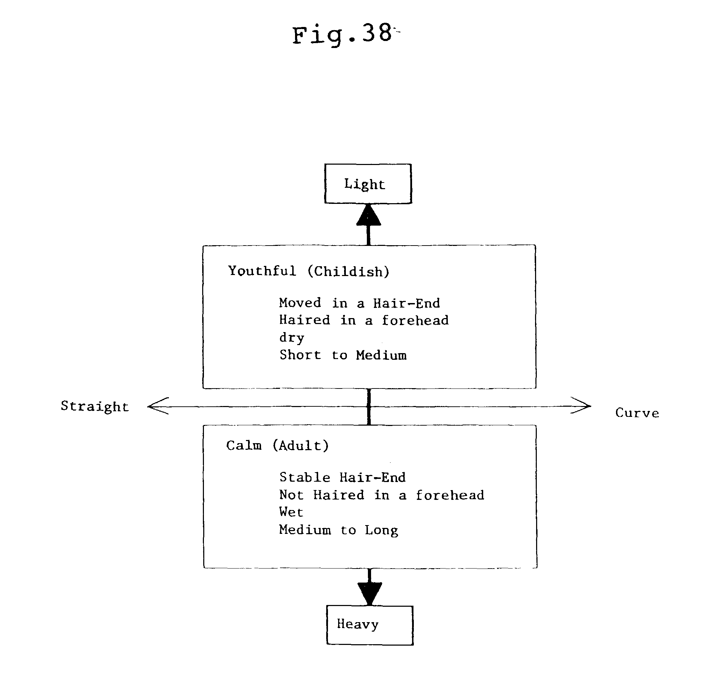

Fig. 38 is an illustration map to express "light" and "heavy" image along a perpendicular axis.

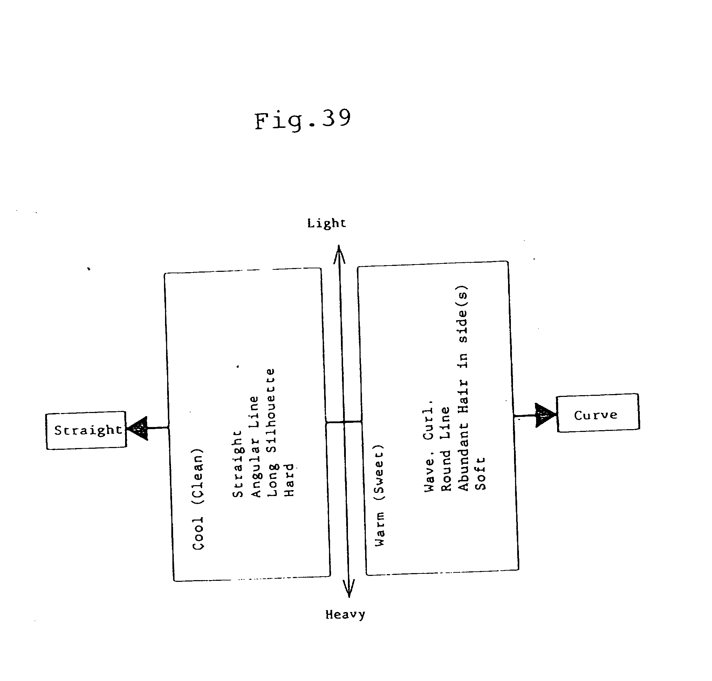

Fig. 39 is an illustration map to express "straight" and "curve" image along a horizontal axis.

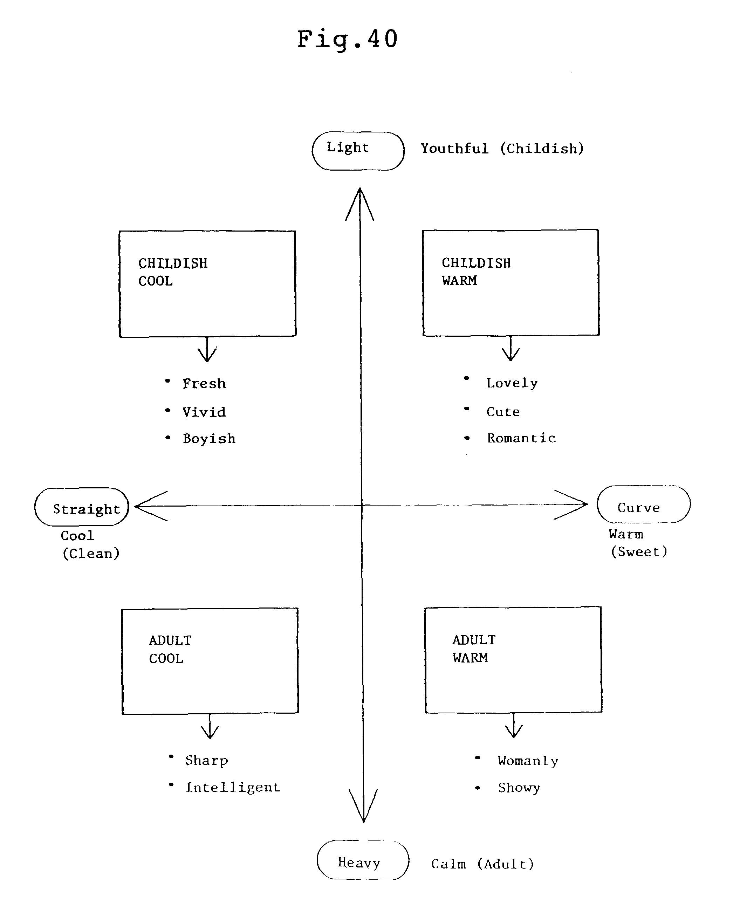

Fig. 40 is an illustration drawing for images of hairstyles on an axis of co-ordinates.

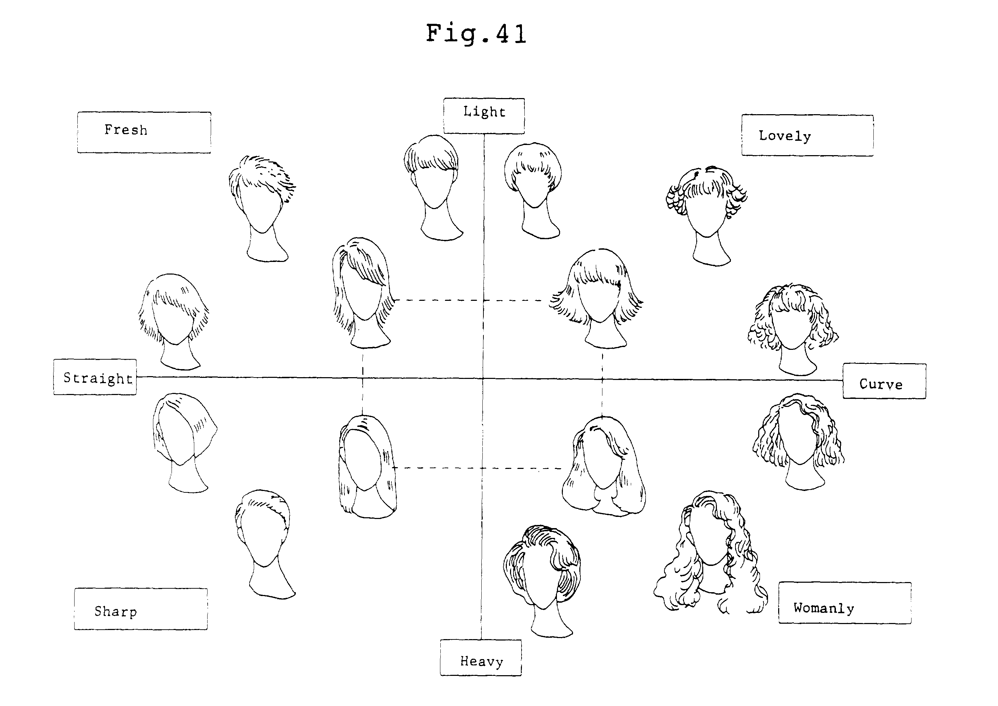

Fig. 41 is an illustration map for arranging various hairstyles represented by images on an axis of co-ordinates.

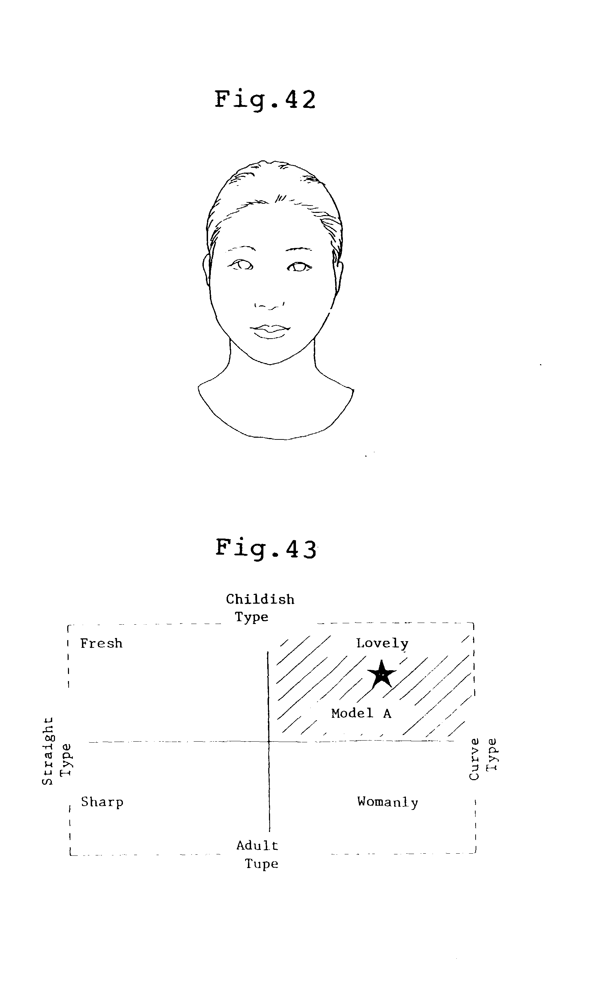

Fig. 42 is a face of a Model A.

Fig. 43 is an illustration drawing which expresses the requirements of said Model A.

### DESCRIPTION OF THE PREFERRED EMBODIMENT

The preferred embodiments are now explained herein.

This invention comprises an inner line which constitutes a boundary line between a face and a hairline and an outer line which constitutes an outside of the hairstyle, through which a contour of the face and its image are defined for selecting a hairstyle, and then it is analysed whether the selected hairstyle is suitable in its form and balance and also whether the selected style is suitable for the image. Thus the suitable selection of the hairstyle is adopted.

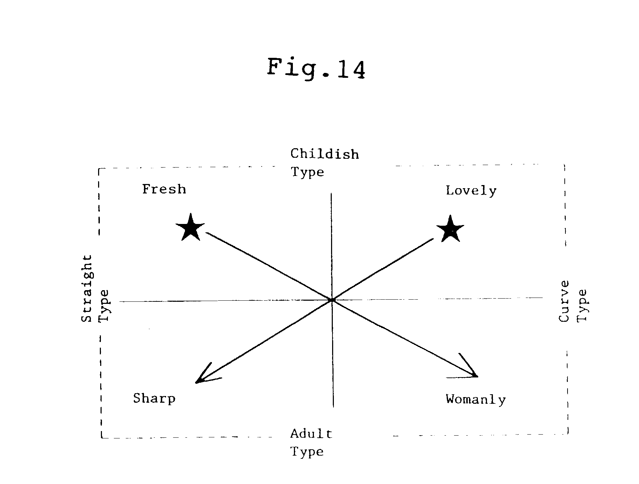

At the same time, in reference with Figs. 38, 39 and 41, an image for "light" and "heavy" is placed on a perpendicular axis, while in reference with Figs. 14, 38, 39, 41 and 43, an image for "straight line" and for "curve line" is also placed on a horizontal axis, so that some representative hairstyles expressing those images are arranged as a hairstyle image map.

The present inventors have made an enquiry among more than thirty professional beauticians and offered them questionnaires whether actual photographs with some hairstyles are suitable thereof or not, and also asked for their relative reasons. The answers to the questionnaires yielded the following reasons for unsuitability of hair type:
"The contour of the face as a round face, angular face, narrow forehead and so on, is too much emphasised", "the face comes too big", "the head portion comes too big", "the only lower part of the face comes too big for the round face", "heavy", "unclean feeling", "ill-health feeling", "dark", "quiet", "poor", "too old", "antique", "unnatural", "like a wig wearing" and so on.

Now, these causes are assorted out as the following factors.
1. Factor 1 Balance and Formation of the hairstyle.
2. Factor 2 Image.

With regard to the above two factors, they are further analysed, and for the factor 1, five elements are adopted, while for the factor 2, two elements are adopted as below:

### Factor 1

Element 1 : Balancing between upper and lower parts of a face.
Element 2 : Silhouette.
Element 3 : Contour of the face (=face line) is too much emphasised.
Element 4 : Balancing between the size of a head and that of the face.
Element 5 : Balancing in total in consideration of space balance.

### Factor 2

Element 1 : An impression on the selected hairstyle.
Element 2 : An image gap between face features and a selected hairstyle.

According to the above theory, if we decide a hairstyle based on the above factors and elements, we can select the suitable hairstyle.

Now, with reference to the drawings, we will explain each element in detail.

Referring to Figs. 1A and 1B, a volume of hair is spread horizontally so that the face looks too wide and it is an example of Factor 1 - Element 1 wherein "Balancing between upper and lower parts of a face" is shown.

With reference to Figs. 2A and 2B, wherein a volume of hair exists on the upper side so that the face looks too long, and with reference to Figs. 3A and 3B, wherein a volume of hair exists sideways so that the face looks too wide. These two examples are true of Factor 1 - Element 2 which states "silhouette".

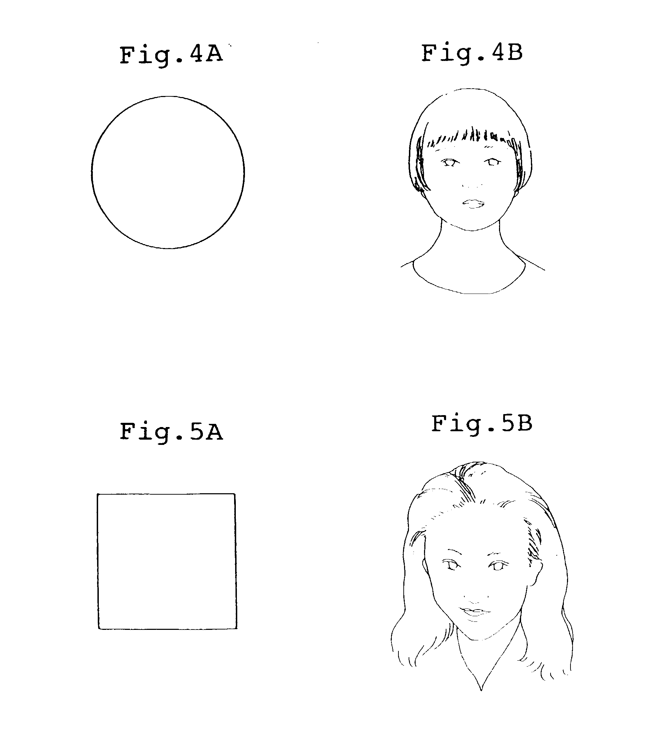

With reference to Figs. 4A and 4B, wherein both of forehead line and jaw line are too much clearly expressed so that smart appearance of the face is lost, and with reference to Figs. 5A and 5B, wherein each corner of the forehead and jaw line are shown too angular so that femininity of the face is lost. These two examples illustrate Factor 1 - Element 3 which belongs to "contour of the face (=face line) is too much emphasised".

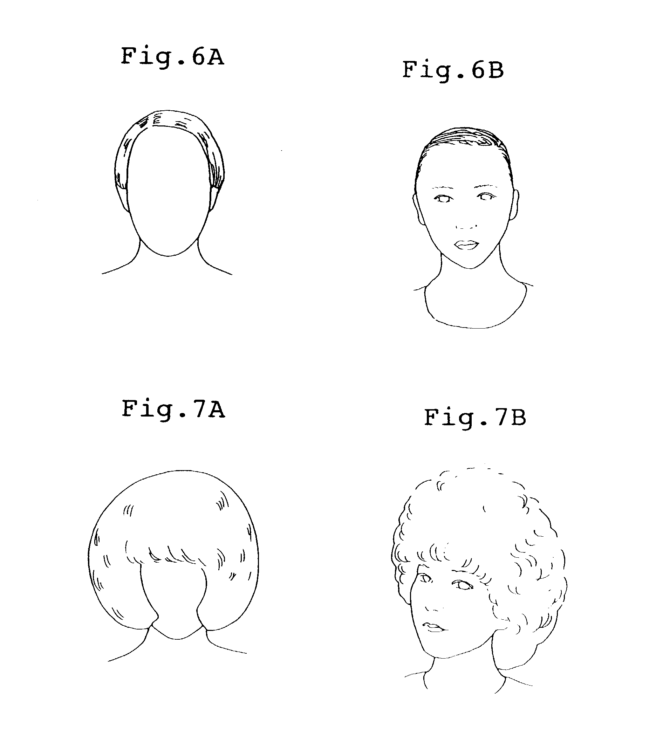

With reference to Figs. 6A and 6B, wherein a small volume of hair is present so that the head portion looks too small, and with reference to Figs. 7A and 7B, wherein a volume of hair is present so that total balance for the face and hair is not correct. These two examples are true of Factor 1 - Element 4 which expresses "balancing between the size of the head and that of the face".

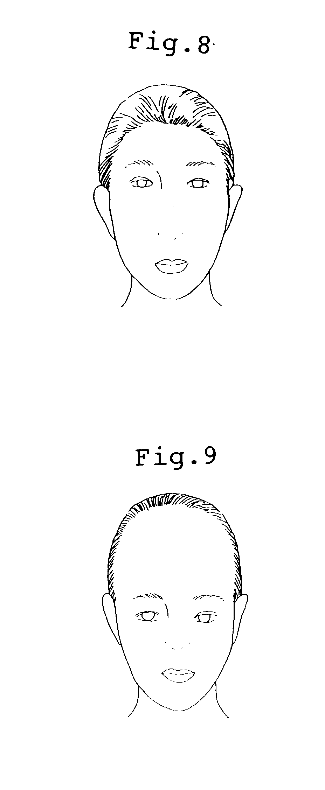

Fig. 8, shows a forehead which is very narrow so that the place of the eyes is too high, whereas Fig. 9, shows a forehead which is very wide so that the place of the eyes is too low. These two examples illustrate Factor 1 - Element 5 which defines "balancing in total in consideration of space balance". Thus, a good balance should be considered not only for face portion only but also for head portion.

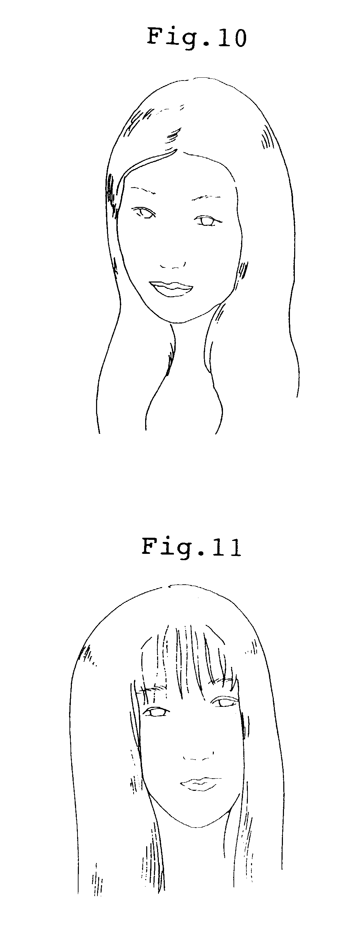

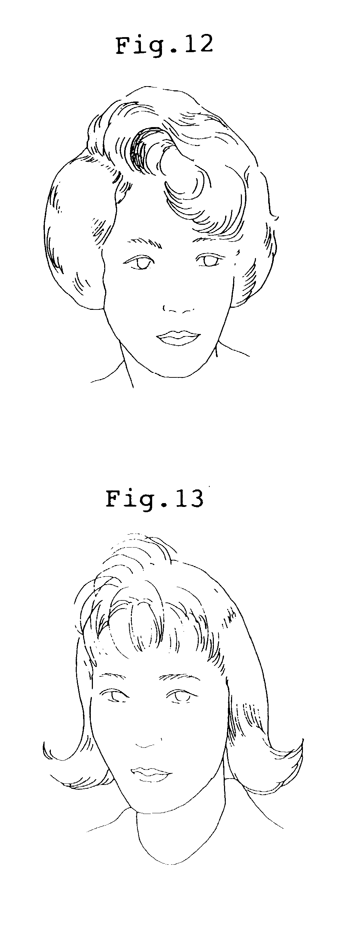

Concerning Factor 2 - Element 1 which defines "an impression", relative examples are shown in Fig. 10 for unclean feeling. Fig. 11 for dark, Fig. 12 for too old, and Fig. 13 for unnatural.

Regarding Factor 2 - Element 2 which defines "image gap", there is a suitable hairstyle for older women compared to younger women, and if the image gap is incurred for the hairstyle which does not fit the women's ages the hairstyle is not suitable.

The present inventors have developed a panel on which various hairstyles are arranged and assorted with various faces from 20 year old and 50 year old women based on which further questionnaires are presented to beauticians.

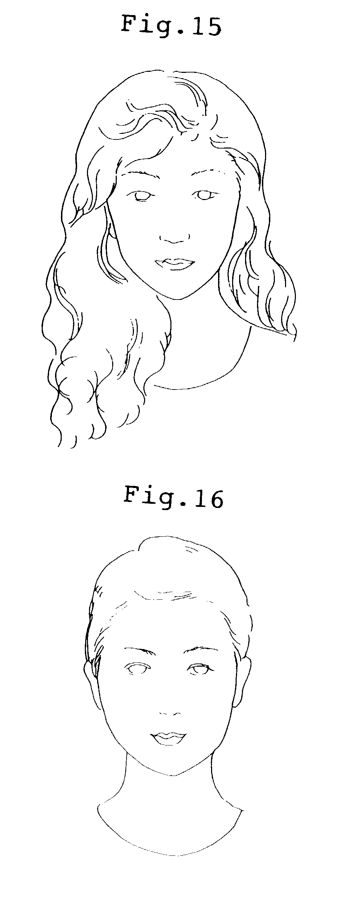

As a result, it is proved that for 20 year old women the hairstyle which is too far removed from their images is not suitable. For instance, as shown in Fig. 14 in which there are two diagonal lines, one line is "fresh" against to "womanly" while the other line is "lovely" against to "sharp". According to these diagonal lines, a fresh and cool faced woman of 20 years old is not suited to womanly long hair as shown in Fig. 15. On the other hand, a lovely faced woman of 20 years old is not suitable with a sharp and cool hairstyle at all.

With regard to 50 year old women, the age should be regarded more important than their faces. Therefore, the hairstyle having a young image may be regarded as improper and not suitable. Referring to Figs. 1 7A, 17B, 17C and 17D, wherein the forehead is concealed by forehairs with curling hair, these hairstyles look too childish and are not suitable.

With reference to Figs.18A, 18B, 18C and 18D, where sexy feeling is emphasised with waved long hair, these hairstyles do not offer any calmness for the age.

Referring to Figs. 1 9A, 19B, 19C and 19D, where a wild image is emphasised with short hair of straight touch, these hairstyles, same as Fig. 18, do not offer any calmness for the age.

In reference to Figs. 20A, 20B, 20C and 20D, where the cleanness is emphasised with long hair of straight touch, these hairstyles lack calmness and comfort for the age.

During the steps and procedures to analyse and to study the suitable hairstyle, it is found that some styles are suitable for any woman. In other words, as shown in Figs. 21A, 21B, 21C, 21D, 21E and 21F, where short hair with forehairs is worn in natural situations under egg-shape silhouettes, these hairstyles are suitable for both of 20 and 50 year old women.

Referring to Figs. 22A and 22B, where straight and natural long hair is expressed, these hairstyles are quite suitable for 20 year old women.

Referring to Figs. 23A and 23B, where gentle waved hair are furnished with from short and medium hair, these hairstyles are suitable for 50 year old women.

As a result of the enquiry, the viewpoints of the beauticians for analysis are mostly on a total contour of the applicant and then jaws, foreheads, images, forms of the heads, length of the necks, measurement of the cheek, and the balance of the whole style. These individual viewpoints should be regarded as important facts, but it is quite troublesome to make all such analyses thereupon. These viewpoints are also influenced upon by the individualities of the beauticians, and for an amateur beautician it is quite difficult to make such analyses. In order to avoid these difficulties, the present inventors have found an inner line and an outer line for easier analysis instead of these viewpoints.

With reference to Figs. 24, 25, 26A and 26B, the inner line is a boundary line between the face and the hairline. Especially for Fig. 5, in case the hairline is concealed by forehairs, the inner line should be considered to be the line formed by the forehairs and the face. The outer line means the line for the outside of the hairstyle, and refers to the silhouette. When the inner line and the outer line are compared with in Fig. 26, it should be understood that the hairstyle of Fig. 26B is more angular in square than that of Fig. 26A. The face of Fig. 27B looks longer than that of Fig. 27A. Thus, when this inner line and outer line are checked, the contour of the face and the image produced by the selected hairstyle can be clearly known.

Now, it is now studied what is the most preferable hairstyle by adopting this inner line and outer line theory. In the prior art, a standard proportion for the face was already developed, and taking this standard proportion into account including head portions, a value of the standard proportion for the hairstyle was calculated.

Fig. 28 and Fig. 29 show the standard proportion developed by this invention. In reference to these figures, the standard proportion is obtained from consideration of:
1. The place of eyes stands in the centre.
2. The proportion ratio between distance from the eye to a top end of the hairstyle and distance from the eye to a bottom end of a jaw is 1 : 1.
3. The proportion ratio between length of a forehead, distance from the bottom of the forehead to a nose tip and distance from the nose tip to the bottom of the jaw is 1 : 1 : 1.
4. The proportion ratio between length of the forehead and distance from the top end of the forehead at the hairline to the top of the hairstyle is 1 : 05.
5. The proportion ratio between length and breadth of the face including the head and hair is 1.5 : 1.
6. The proportion ratio between length and breadth of the face only is 1.4 : 1.

When the balance is checked based on this standard proportion, the important point is that a good balance should be kept lengthways and sideways in the centre place of the eyes.

As shown in Fig. 30, a beautiful proportion is provided in the egg-shape face. In this case, the shape of the jaw does not offer any effect at all even if it is round or angular. This proportion has obtained the beautiful condition.

Referring to this standard proportion, through the adoption of the inner line and the outer line, features of the head and the face are observed for analysis.

With reference to Fig. 31, ANALYSIS 1 proves the hairstyle by the inner line and the outer line. By this checking, Factor 1 - Element 1 of "balancing between upper and lower parts of the face" is proved and also Factor 1 - Element 4 of "balancing between the size of the head and that of the face" is proved. Next, ANALYSIS 2 proves lengthways and sideways to analyse Factor 1 - Element 2 "silhouette". Thirdly, ANALYSIS 3 proves Factor 1 - Element 3 of "face line is too much emphasised". Fourthly, ANALYSIS 4 proves Factor 1 - Element 5 of "balancing in total, space balancing". Thus, all questions with regard to Factor 1 - from Element 1 to Element 5 are clearly analysed. With this analysis method, the unsuitable hairstyles shown in Fig. 1 - Fig. 9 are analysed accordingly and as a result the relative causes not to be suitable are obtained.

As above explained, the simple analysis can be made for Factor 1 of "balance and formation of the hairstyle". In addition to this analysis, Factor 2 of "image" is also studied for Factor 2 - Element 1 of "an impression" and for Factor 2 - Element 2 of "image gap", so that desirable hairstyles can be selected. With regard to this Factor 2, this belongs to a prior art, and therefore the present invention does not claim any analysis method for the image.

After the above analysis is finished, the bad elements should be corrected and the suitable hairstyle should be recommended. In order to realise this correction, the present inventors made various trials for the hairstyle by experimental photographs. With these specimens for the hairstyle, the inventors made an enquiry search among professional beauticians, and collected relative data for analysis. As a result of this search, four principles have been found.

In reference to Figs. 32A, 31B and 31C, the first principle is shown that when forehairs become short the length of their face looks long.

In reference to Fig. 33A and Fig. 33B, the second principle is shown that when forehairs are cut in straight line the face looks short in clear face line and when forehairs are cut in irregular line the face looks long and obscure.

In reference to Figs. 34A and 34B, the third principle is shown that when forehairs are placed in diagonal the face looks long.

In reference to Figs. 35A, 35B and 35C, the fourth principle is shown that when the ears appear out of side hair the lower parts of the face look long and clear.

The examples according to these principles are now shown.

Referring to Figs. 36A, 36B and 36C, the hairstyle of 36A shows an angular and long face with a small quantity of hair. This can be corrected to Fig. 36B and 36C. When comparing Fig. 36B with 36C, the hairstyle of Fig. 36C is arranged with a horizontal bank and with bulky sides, which gives the feeling of short hairs with a short face, while that of Fig. 36B is arranged with diagonal forehairs and it does not look preferable.

Referring to Figs. 37A, 37B and 37C, in contrast to the above Fig., a round face is submitted. In this case, Fig. 37C provides the impression that the face looks slim and long, while Fig. 37B provides the impression that the face looks wide and it does not look preferable.

When a client visits a beauty parlour, she has her own image for her hairstyle in advance, and therefore, a professional beautician has to select a suitable hairstyle for the client adopting her own image. Therefore, the inventors have developed a hairstyle image map which shows mutual connections between an image and a hairstyle.

With reference to Figs. 38 and 39, the image map shows a chart on which images of "light" and "heavy" are presented in a perpendicular axis while lines "straight" and "curve" are presented in a horizontal axis. The light image means "youthful" and "childish", and the hairstyle is "moved in a hair-end", "bright hair colour", "haired in a forehead", "dry", "short to medium cut", and this effects to make the face short. The heavy image means "calm" and "adult", and the hairstyle is "stable hair end", "dark hair colour", "no hair on forehead", "wet" and "medium to long cut", and this effects to make the face long. The curve line has images of "warm" and "sweet" and the hairstyle is "wave curled", "round line", "abundant hairs in sides" and "soft", and thus this effects to express a gentle contour. The straight line has images of "cool" and "clean", and the hairstyle is "straight", "angular line", "long silhouette", and "hard", and thus this effects to express a sharp contour.

With reference to Fig. 40, the above Fig. 38 and Fig. 39 are combined for clearer expression.

In accordance with these image maps of Fig. 38, Fig. 39 and Fig. 40, representative hairstyles are arranged, which is shown in Fig. 41.

With reference to Fig. 42, a Model A is now counselled accordingly. The face of this model falls in the childish zone because her face looks short and her eyes and contour look round.

Referring to Fig. 43, this Model A belongs to a zone of "lovely". When the inner line and the outer line check her face, her face looks round with thin hair. Her cheeks also look bulky. According to the analysis of "formation and balance" adopted by the inner line and the outer line, the balance between upper and lower parts of the face shows that the lower parts look a little wide. When the checking on lengthways and sideways is performed, the face looks rather wide sideways. The face line checking shows her face is a round type. The check for total balancing does not offer any problem at all.

The requests of this Model A is as follows:
1. She looks childish in normal status, and therefore she would like to express herself as adult when she is working in her office.
2. In her private time, she would like to wear a fresh and trendy hairstyle.

On checking the hairstyle map shown in Fig. 40, her present hairstyle falls in "childish" and "warm" on the right and upper zone, and her request 1 indicates the right and lower zone of "adult" and "warm". Her request 2 indicates the left and upper zone of "childish" and "cool". In order to meet her requests, the following corrections are made:

Request 1 - The outer line is expanded vertically to make her face long by standing her hair up, and her forehairs are gently curved toward inside with "curve" line, so that a calm feminine impression is given. In addition, the make-up to depict the brow in arch-style is furnished for a more adult image.

Request 2 - The inner line is devised to be long by falling her forehairs, so that her face becomes slimmer, the lower part of the outer line is devised to be smaller to show the jaw line clearer, while the hair end is also devised to curve toward outside, which expresses herself as active. In addition, the make-up to express her brow in ascending manner to emphasise an image of sharpness.

Through these corrections, both hairstyles are admitted to be suitable, and thus both requests of this Model A are attained.

As explained so far, according to this invention, a hairstyle is simply analysed and the suitable hairstyle is correctly and easily selected, and moreover a hairstyle image map is provided so that an image of the hairstyle to be selected can be obtained.

It is further understood by those skilled in the art that the foregoing description is a preferred embodiment of the disclosed matter and that various changes and modifications may be made in the invention without departing from the spirits and scope thereof.

## Claims

1. A method for selecting a suitable hairstyle, which comprises:
an inner line constituting a boundary line between a face and an inside of hair;
an outer line constituting an outside of the hair; and
a contour of the face and an image produced by a hairstyle are defined by the inner line and the outer line;
wherein an analysis is performed to determine whether the hairstyle is suitable or not with regard to a formation and a balance, and another analysis is also performed, to determine whether the hairstyle is also suitable or not with regard to image.

2. A method according to Claim 1, wherein an analysis of a formation of a hairstyle and a balance if performed with five elements of balancing between upper and lower parts of a face, a silhouette, a face line, balancing between a head and the face.

3. A method according to Claim 1, wherein an analysis of an image of hairstyle is performed with two elements of an impression of a hairstyle and an image gap between face features and a selected hairstyle.

4. A method according to Claim 1, wherein for analysing a formation of a hairstyle and a balance an analysis is performed under a comparative step adopting a standard proportion between hair and a face.

5. A method according to Claim 1, wherein a standard proportion between hair and face comprises:
a placement of eyes in a centre of the hair and face;
a proportion ratio between a distance from the eye to a top end of hairs and the distance from the eye to a bottom end of a jaw is 1 : 1;
the proportion ratio between length of a forehead, the distance from a bottom end of the forehead to a nose tip and the distance from the nose tip to the bottom end of the jaw is 1 : 1 : 1;
the proportion ratio between the length of the forehead and the distance from the top of the forehead where the hair starts to grow to the top end of the hairs is 1 : 0.5; and
the proportion ratio between the length of a face and width of the face including a head and the hair is 1.5 : 1.

6. An image map for a hairstyle which comprises:
"light" and "heavy" images are presented in a perpendicular axis; and
"straight" line and "curve" line images presented in a horizontal axis;
wherein representative hairstyles which express the images to be held by each hairstyle are arranged in an axis of co-ordinates.

7. An image map according to Claim 6, wherein a light image has youthful and childish feelings while this hairstyle has characteristics of moving hair-ends, a bright hair colour, a forehair, a dry hair, and a hair length from short to medium.

8. An image map according to Claim 6, wherein a heavy image has calm and adult feelings while this hairstyle has characteristics of a stable hair end, a dark hair colour, no forehair upon the forehead, a wet hair, and a hair length from medium to long.

9. A image map according to Claim 6, wherein a straight line image has cool and clean feelings while this hairstyle has characteristics of a hard hair, a long silhouette, an angular lined hair and straight hair.

10. A image map according to Claim 6, wherein a curve line image has warm and sweet feelings while this hairstyle has characteristics of a waved and curled hair, a round line hair, abundant hair in sides and a soft hair.

11. A method for selecting a suitable hairstyle, in conformity with individual personalities and face contours comprising:
adopting the request of a woman for selection of hairstyle;
providing an image map for hairstyles where various hairstyles are arranged on the axis of co-ordinates according to images;
wherein an inner line which constitutes a boundary line between a face and inside of hair and also an outer line which constitutes outside of hair are developed; and
using these two lines for the selection of the suitable hairstyle for the selector.
